# EUROPÄISCHE PATENTSCHRIFT

(11) **EP 0 902 268 B1**
(45) Veröffentlichungstag und Bekanntmachung des Hinweises auf die Patenterteilung: **31.03.2004**
(21) Anmeldenummer: 98115583.1
(22) Anmeldetag: 19.08.1998
(51) Int. Cl.: G01M 3/28

(54) **Druckprüfgerät**
Pressure testing apparatus
Appareil pour tester la pression

(30) Priorität: 13.09.1997 DE 19740276
(43) Veröffentlichungstag der Anmeldung: 17.03.1999
(73) Patentinhaber: Wolfgang Rausch GmbH & Co. Electronic-Maschinenbau, 88136 Weissensberg (DE)
(72) Erfinder: Rausch, Stefan, 88138 Weissensberg b. Lindau (DE)
(74) Vertreter: Flosdorff, Jürgen, Dr.

(56) Entgegenhaltungen:
- EP-A- 0 282 687
- EP-A- 0 504 591
- EP-A- 0 637 737
- EP-A- 0 747 693
- DE-A- 2 932 280
- DE-A- 4 328 575
- GB-A- 2 190 722
- US-A- 4 372 658
- PATENT ABSTRACTS OF JAPAN vol. 012, no. 071 (P-673), 5. März 1988 (1988-03-05) & JP 62 211537 A (NIPPON KOKAN KK), 17. September 1987 (1987-09-17)

## Beschreibung

Die Erfindung betrifft ein Druckprüfgerät zur Innenprüfung der Dichtigkeit von Rohren, insbesondere von Muffenverbindungen von Rohren, mit zwei aufblasbaren ringförmigen Dichtkissen, die über eine erste Druckluftleitung mit einer Druckluftquelle in Verbindung stehen und im axialen Abstand voneinander an einem im wesentlichen rohrförmigen Gerätekörper angebracht sind, wobei sie im aufgeblasenen, an der Rohrinnenwandung anliegenden Zustand einen ringförmigen Prüfraum zwischen der Rohrinnenwandung und dem rohrförmigen Gerätekörper begrenzen, wobei ferner eine zweite Druckmittelleitung in den Prüfraum führt und ein Überdruck in dem Prüfraum durch einen Drucksensor erfaßbar ist.

Ein derartiges Druckprüfgerät ist aus der US 3,400,574 bekannt. Das Druckprüfgerät ist ein Fahrwagen, der ein mit Rädern versehenes Rohr enthält, das einen mittigen Strömungskanal bildet, so daß das Druckprüfgerät in einer Pipeline Druckprüfungen durchführen kann, während die Pipeline weiter betrieben wird. In den vorderen Endbereich des Druckprüfgerätes ist eine Kamera fest eingebaut, mit der der vor dem jeweiligen Prüfbereich der Pipeline liegende Innenraum überwacht wird, so daß Hindernisse erkennbar sind, an denen sich das Prüfgerät festsetzen könnte. Das Druckprüfgerät wird mittels einer Winde durch die Pipeline gezogen.

Ein derartiges Druckprüfgerät ist teuer, und es ist schwierig, das Gerät exakt zu positionieren, wenn z.B. Muffenverbindungen von Rohren auf Dichtigkeit überprüft werden sollen, da die eingebaute Kamera nur den Bereich vor dem Druckprüfgerät überblicken kann.

Der vorliegenden Erfindung liegt die Aufgabe zugrunde, ein Druckprüfgerät der betrachteten Art so weiter zu entwickeln, daß es mit geringerem Kostenaufwand herstellbar ist und daß seine exakte Positionierung an einer zu untersuchenden Stelle einer Rohrleitung, insbesondere einer Muffenverbindung, erheblich erleichtert ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Bei dem erfindungsgemäßen Druckprüfgerät besteht der im wesentlichen rohrförmige Gerätekörper wenigstens in dem Bereich zwischen den Dichtkissen aus einem Rohr aus einem durchsichtigen Material, und das Druckprüfgerät ist mit einem Kamerafahrwagen derart koppelbar, daß eine schwenkbare Kamera des Kamerafahrwagens innerhalb des durchsichtigen Rohre angeordnet und derart ausgerichtet ist, daß mit ihr der zu untersuchende Bereich der Rohrinnenwandung erfaßt wird.

Damit ist das erfindungsgemäße Druckprüfgerät ein verhältnismäßig einfach aufgebautes Zusatzgerät, das bei Bedarf zusammen mit einem meist schon vorhandenen und für zahlreiche andere Zwecke einsetzbaren Kamerafahrwagen verwendbar ist, so daß zur Dichtigkeitsprüfung von Rohren, insbesondere von Muffenverbindungen, keine herkömmliche kostspielige Druckprüfanlage mehr erforderlich ist. Das durchsichtige Rohr besteht beispielsweise aus Acrylglas, ohne daß die Erfindung hierauf beschränkt ist.

Die im Innenraum des durchsichtigen Rohres befindliche Kamera, bei der es sich vorzugsweise um eine Kreis- und Schwenkkamera handelt, kann den zu prüfenden Rohrbereich, vorzugsweise eine Muffe, lokalisieren, woraufhin dann die Kamera bevorzugt auf 90° angeschwenkt wird. Auf diese Weise kann das Druckprüfgerät exakt so positioniert werden, daß sich zu beiden Seiten der zu prüfenden Muffe jeweils ein Dichtkissen bzw. eine Dichtmanschette befindet, die daraufhin mit Druckluft gefüllt wird. Da das Druckprüfgerät exakt an den zu prüfenden Muffen positionierbar ist, kann der axiale Abstand zwischen den Dichtkissen besonders klein sein, wodurch der Prüfraum ein geringes Volumen hat und in kürzester Zeit mit geringen Mengen des Prüfmediums, d.h. Druckluft, gefüllt werden kann.

In weiteren Einzelheiten der Erfindung wird vorgeschlagen, daß die Dichtkissen in ringförmigen, querschnittlich etwa U-förmigen Halterungen sitzen, die an den seitlichen Enden des durchsichtigen Rohres befestigt sind. Das durchsichtige Rohr kann dabei beispielsweise in umlaufende Nuten der Halterungen eingesteckt und mit diesen verklebt sein, ohne daß die Erfindung hierauf beschränkt ist. Wichtig ist, daß der Anschluß des durchsichtigen Rohres an die Halterungen dicht ist, da hier kein Druckmedium entweichen darf.

Die erste Druckluftleitung, die den beiden Dichtkissen Druckluft zuführt, mündet bevorzugt durch die Bodenwand der Halterungen in die beiden Dichtkissen ein. Die erste Druckluftleitung verläuft dabei innerhalb des durchsichtigen Rohres, was bevorzugt auch für die zweite Druckluftleitung zutrifft, die durch das durchsichtige Rohr in den Prüfraum einmünden kann. Alternativ hierzu kann diese auch durch den Grundkörper in den Prüfraum geführt werden.

Von der zweiten Druckluftleitung zweigt eine Leitung ab, die zu dem Drucksensor führt, mit dem der Überdruck in dem Prüfraum erfaßt wird. Dieser Drucksensor ist nach einem weiteren Vorschlag der Erfindung an dem Kamerawagen befestigt, so daß die Verbindungsleitung zum Prüfraum kurz ist. Dies bringt es mit sich, daß der Drucksensor den Überdruck in dem Prüfraum sehr genau erfassen kann, da nur ein geringes Druckluftvolumen in dem kurzen Schlauchstück mitgemessen wird.

Während des Meßvorgangs wird die zweite Druckluftleitung vor der Abzweigstelle bevorzugt mittels eines elektromagnetischen Ventils geschlossen, da während des Meßvorgangs natürlich die Verbindung zur Druckluftquelle unterbrochen sein muß.

Von dem Drucksensor führt eine elektrische Leitung zu der Anzeige- und Auswerteelektronik, die bevorzugt in einem Fahrzeug über der Erde stationiert ist. Die elektrische Leitung wird mit großem Vorteil innerhalb einer Druckluftleitung, bevorzugt innerhalb der zweiten Druckluftleitung angeordnet. Alternativ hierzu wird vorgeschlagen, die elektrische Leitung dauerhaft mit einer Druckluftleitung zu verbinden, beispielsweise die elektrische Leitung an der Außenseite einer Druckluftleitung anzukleben. Die beiden Druckluftleitungen sind ebenfalls miteinander dauerhaft verbunden.

Diese Ausbildungen haben den Vorteil, daß die beiden Druckluftschläuche und das Elektrokabel von einer einzigen Trommel abgewickelt bzw. auf eine einzige Trommel aufgewickelt werden, wodurch die anderenfalls erforderliche Synchronisation mehrerer Trommeln entfällt.

Das Druckprüfgerät ist bevorzugt mit Rädern versehen, die an dem von der Eintrittsöffnung der Kamera abgewandten, vorderen Endabschnitt des Druckprüfgerätes befestigt sind. Vorzugsweise sind zwei Räder angebracht, die in der Stirnansicht des Gerätes im Winkel zueinander stehen. Die Räder sind vorzugsweise an Tragarmen angebracht, die von der Halterung des vorderen Dichtkissens in axialer Richtung vorstehen. Damit befinden sich die Räder nicht unter dem Gerät, sondern vor diesem, was es ermöglicht, daß verhältnismäßig große Räder angeordnet werden können, die nur einen geringen radialen überstand über die Dichtkissen in deren ungefüllten Zustand haben. Damit ist das Füllvolumen der Dichtmanschetten gering, so daß die Füll- und Entlüftungszeit nur kurz ist.

Das Druckprüfgerät wird bei seinem Einsatz zweckmäßigerweise an dem Kamerafahrwagen angeschraubt. Hierzu kann der Kamerafahrwagen in dem Endbereich seiner die Kamera haltenden Schwenkarme mit einem Querträger versehen sein, der an der rückwärtigen Halterung des hinteren Dichtkissens angeschraubt wird.

Alternativ hierzu kann das Druckprüfgerät über eine lösbare Rastverbindung mit dem Kamerawagen gekoppelt sein.

Das erfindungsgemäße Druckprüfgerät benötigt zu seinem Einsatz keine Seilwinde, weshalb es vom Startschacht aus positioniert werden kann und auch einsetzbar ist, wenn nur eine Seite der zu prüfenden Rohrleitung zugänglich ist. Das Druckprüfgerät ist mit Hilfe der in seinem Inneren angeordneten Kamera exakt positionierbar, wobei der gesamte Prüfvorgang mit der Kamera überwacht werden kann. Damit ist auch eine Sichtkontrolle einer zu überprüfenden Muffenverbindung möglich.

Zur Versorgung des Prüfgerätes ist bevorzugt ein Zweifach-Schlauch mit integrierter Steuerleitung vorgesehen, so daß nur eine Schlauchtrommel erforderlich ist.

Der gesamte Überprüfungszeitraum ist kurz, da die Dichtmanschetten und der Prüfraum nur ein kleines Volumen haben.

Ein großer Vorteil der Erfindung besteht darin, daß das Druckprüfgerät an vorhandene TV-Anlagen adaptiert werden kann.

Weitere Einzelheiten der Erfindung ergeben sich aus der nachfolgenden Beschreibung einer Anordnung aus einem erfindungsgemäßen Druckprüfgerät und einem herkömmlichen Kamerafahrwagen sowie anhand der Zeichnung. Dabei zeigen:
- Fig. 1: einen Vertikalschnitt durch ein zu überprüfendes Rohr mit einer darin befindlichen Anordnung aus einem Druckprüfgerät und einem Kamerafahrwagen und
- Fig. 2: eine Stirnansicht des Druckprüfgeräts gemäß Fig. 1 von links.

Ein insgesamt mit 1 bezeichnetes Druckprüfgerät ist so innerhalb von Rohren 2 positioniert, daß es deren Muffenverbindung 3 einer Druckprüfung unterziehen kann. Das Druckprüfgerät 1 hat einen im wesentlichen rohrförmigen Gerätekörper 4, der im wesentlichen aus einem Plexiglasrohr 5 und zwei querschnittlich insgesamt etwa U-förmigen ringförmigen Halterungen 6 besteht, die mit dem Plexiglasrohr 5 fest verbunden sind. Hierzu sind die Endabschnitte des Plexiglasrohres 5 beispielsweise in Ringnuten der Halterungen 6 eingesetzt und darin verklebt.

In den Halterungen 6 sitzen Dichtkissen 7, die seitlich von Stegen 8, 9 der Halterungen 6 abgestützt sind. Die Dichtkissen 7 haben in dem dargestellten drucklosen Zustand nur einen verhältnismäßig geringen Abstand zur Innenwandung 10 der Rohre 2.

Ein erster Druckluftschlauch 11, der an seinem nicht dargestellten Ende mit einer Druckluftquelle verbunden ist, mündet in die Dichtkissen 7 ein, indem er mit seinem Endabschnitt 12 und einer Abzweigleitung 13 durch die Bodenwände 14 der Halterungen 6 führt.

Wenn den Dichtkissen 7 Druckluft zugeführt wird, weiten sie sich radial aus und legen sich an die Innenwandung 10 an, womit sie einen Prüfraum 18 zwischen dem Plexiglasrohr 5 und der Innenwandung 10 begrenzen.

In diesen Prüfraum 18 wird Druckluft durch einen zweiten Druckluftschlauch 19 eingeführt, der bei 20 in den Prüfraum 18 einmündet. Von dem Druckluftschlauch 19 zweigt ferner vor dem Druckprüfgerät 1 eine Leitung 15 ab, die zu einem Drucksensor 16 führt. Vor der Abzweigleitung 15 befindet sich in dem Druckluftschlauch 19 bzw. der Druckluftleitung 19 ein elektromagnetisches Absperrventil 17.

Wenn in dem Prüfraum 18 ein vorgegebener Überdruck herrscht, wird dieser Überdruck in seinem zeitlichen Verlauf von dem Drucksensor 16 gemessen, und die Meßwerte werden über eine bevorzugt innerhalb des Druckluftschlauchs 19 angeordneten elektrische Steuerleitung an eine Anzeige- und Auswerteelektronik weitergegeben, die sich oberhalb des Erdbodens befinden. Die beiden Druckluftschläuche 11 und 19 sind bis zum Druckprüfgerät 1, wo sie sich verzweigen, zu einem Zweifach-Schlauch fest miteinander verbunden.

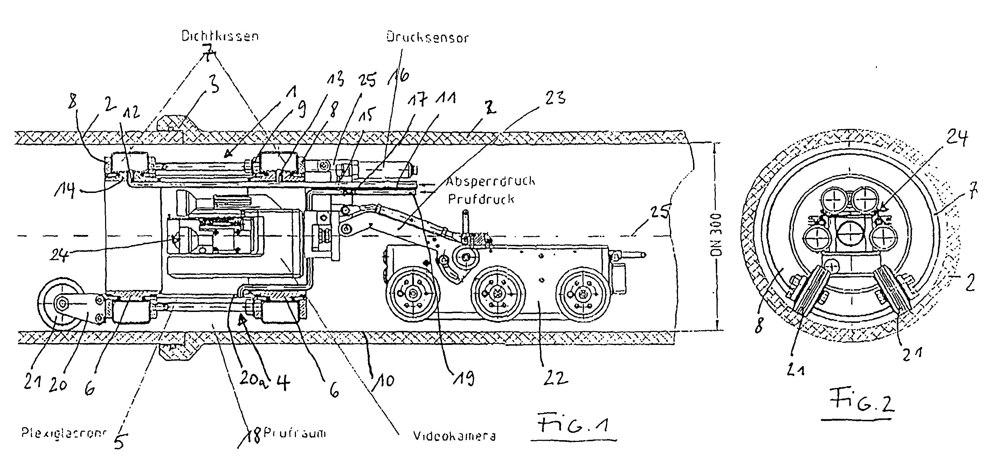

An der vorderen Halterung 6 sind zwei Tragarme 20 angeschraubt, die jeweils ein Rad 21 drehbar halten. Die Räder 21 sind -wie Fig. 2 zeigt- im Winkel zueinander angeordnet. Die Haltearme erstrecken sich in axialer Richtung des Druckprüfgeräts 1, so daß sich die Räder 21 nicht unter, sondern vor dem Druckprüfgerät 1 befinden.

Das Druckprüfgerät ist mit einem herkömmlichen Kamerafahrwagen 22 gekoppelt, der mit Schwenkarmen 23 eine insgesamt mit 24 bezeichnete Kreis- und Schwenkkamera hält. Die Kamera 24 befindet sich im gekoppelten Zustand des Druckprüfgeräts 1 mit dem Kamerafahrwagen 22 im Inneren des Plexiglasrohres 5.

An den Schwenkarmen 23 ist eine Tragkonstruktion 25 angebracht, die an dem Steg 8 der rückwärtigen Halterung 6 angeschraubt ist. Hierdurch bilden das Druckprüfgerät 1 und der Kamerafahrwagen 22 bei der Bewegung durch die Rohre 2 eine Einheit. An der Tragkonstruktion 25 ist außerdem der Drucksensor 16 befestigt.

Die Kamera 24 wird während der Prüfung der Muffenverbindung 3 aus der dargestellten Position um 90° verschwenkt, so daß mit der Videokamera eine Sichtkontrolle des Muffenbereichs während der Prüfung durchgeführt werden kann.

## Patentansprüche

1. Druckprüfgerät (1) zur Innenprüfung von Rohren (2), insbesondere von Muffenverbindungen von Rohren, mit zwei aufblasbaren ringförmigen Dichtkissen (7), die über eine erste Druckluftleitung (11) mit einer Druckluftquelle in Verbindung stehen und im axialen Abstand voneinander an einem Gerätekörper (4) angebracht sind, wobei sie im aufgeblasenen, an der Rohrinnenwandung anliegenden Zustand einen ringförmigen Prüfraum (18) zwischen der Rohrinnenwandung und dem rohrförmigen Gerätekörper begrenzen, wobei ferner eine zweite Druckluftleitung (19) in den Prüfraum führt und ein Überdruck in dem Prüfraum durch einen Drucksensor (16) erfaßbar ist,
**dadurch gekennzeichnet,**
**daß** der Gerätekörper (4) wenigstens in dem Bereich zwischen den Dichtkissen (7) ein Gehäuseteil (5) aus einem durchsichtigen Material aufweist und daß das Druckprüfgerät (1) mit einem Kamerafahrwagen (22) derart koppelbar ist, daß eine schwenkbare Kamera (24) des Kamerafahrwagens (22) in dem Innenraum des Gehäuseteils (5) angeordnet und derart schwenkbar ist, daß sie auf den Bereich der Muffenverbindung ausgerichtet ist.

2. Druckprüfgerät nach Anspruch 1,
**dadurch gekennzeichnet, daß** die Dichtkissen (7) in ringförmigen, querschnittlich U-förmigen Halterungen (6) sitzen, die an den seitlichen Enden des durchsichtigen Gehäuseteils bzw. Rohres (5) befestigt sind.

3. Druckprüfgerät nach Anspruch 1 oder 2,
**dadurch gekennzeichnet, daß** die erste Druckluftleitung (11) durch die Bodenwand (14) der Halterungen (6) in die beiden Dichtkissen (7) einmündet.

4. Druckprüfgerät nach einem der Ansprüche 1 bis 3,
**dadurch gekennzeichnet, daß** an dem von der Eintrittsöffnung der Kamera (24) abgewandten, vorderen Ende des Druckprüfgerätes (1) Räder (21) befestigt sind.

5. Druckprüfgerät nach Anspruch 4,
**dadurch gekennzeichnet, daß** die Räder (21) an Tragarmen (20) angebracht sind, die von der Halterung (6) des vorderen Dichtkissens (7) in axialer Richtung vorstehen.

6. Druckprüfgerät nach einem der Ansprüche 1 bis 5,
**dadurch gekennzeichnet, daß** die zweite Druckluftleitung (19) durch das durchsichtige Rohr bzw. Gehäuseteil (5) oder durch den Grundkörper in den Prüfraum (18) führt.

7. Druckprüfgerät nach einem der Ansprüche 1 bis 6,
**dadurch gekennzeichnet, daß** von der zweiten Druckluftleitung (19) eine Leitung (15) zu dem Drucksensor (16) abzweigt.

8. Druckprüfgerät nach Anspruch 7,
**dadurch gekennzeichnet, daß** vor der Abzweigung der zum Drucksensor (16) führenden Leitung (15) eine elektromagnetisches Ventil (17) in der zweiten Druckluftleitung (19) angeordnet ist.

9. Druckprüfgerät nach einem der Ansprüche 1 bis 8,
**dadurch gekennzeichnet, daß** das Druckprüfgerät (1) an dem Kamerafahrwagen (22) anschraubbar ist.

10. Druckprüfgerät nach einem der Ansprüche 1 bis 9,
**dadurch gekennzeichnet, daß** das Druckprüfgerät über eine lösbare Rastverbindung mit dem Kamerawagen gekoppelt ist.

## Claims

1. A pressure testing device (1) for internally testing pipes (2), particularly spigot and socket joints of pipes, including two inflatable, annular sealing cushions (7), which communicate with a compressed air source via a first compressed air line (11) and are mounted on a device body (4) axially spaced from one another, whereby they define, in the inflated state in which they engage the internal wall of the pipe, an annular testing space (18) between the inner wall of the pipe and the pipe-shaped device body, whereby further a second compressed air line (19) feeds into the testing space and an overpressure in the testing space may be detected by a pressure sensor (16), **characterised in that** the device body (4) has a housing portion (5) of a transparent material, at least in the region between the sealing cushions (7), and that the pressure testing device (1) may be coupled to a movable camera carriage (22) such that a pivotable camera (24) on the movable camera carriage (22) is arranged in the interior of the housing portion (5) and is pivotable such that it is directed towards the region of the spigot and socket joint.

2. A pressure testing device as claimed in Claim 1, **characterised in that** the sealing cushions (7) are situated in annular mountings (6), which are of U-shaped cross-section and are secured to the lateral ends of the transparent housing portion or tube (5).

3. A pressure testing device as claimed in Claim 1 or 2, **characterised in that** the first compressed air line (11) communicates with the two sealing cushions (7) through the base wall (14) of the mounting (6).

4. A pressure testing device as claimed in one of Claims 1 to 3, **characterised in that** wheels (21) are secured to the front end of the pressure testing device (1) remote from the entry opening of the camera (24).

5. A pressure testing device as claimed in Claim 4, **characterised in that** the wheels (21) are mounted on support arms (20), which project from the mounting (6) of the front sealing cushion (7) in the axial direction.

6. A pressure testing device as claimed in one of Claims 1 to 5, **characterised in that** the second compressed air line (19) passes through the transparent tube or housing portion (5) or through the base body into the testing space (18).

7. A pressure testing device as claimed in one of Claims 1 to 6, **characterised in that** a line (15) branches off from the second compressed air line (19) to the pressure sensor (16).

8. A pressure testing device as claimed in Claim 7, **characterised in that** an electromagnetic valve (17) is arranged in the second compressed air line (19) upstream of the junction of the line (15) leading to the pressure sensor (16).

9. A pressure testing device as claimed in one of Claims 1 to 8, **characterised in that** the pressure testing device (1) may be connected to the movable camera carriage (22) by screws.

10. A pressure testing device as claimed in one of Claims 1 to 9, **characterised in that** the pressure testing device is coupled to the camera carriage by means of a releasable locking connection.

## Revendications

1. Appareil de contrôle de pression (1) pour le contrôle intérieur de tuyaux (2), notamment de raccords par manchon de tuyaux, avec deux coussinets d'étanchéité annulaires gonflables (7) qui sont reliés par une première conduite d'air comprimé (11) à une source d'air comprimé et qui sont disposés à une distance axiale l'un de l'autre à un corps d'appareil (4), où à l'état gonflé, s'appliquant à la paroi intérieure du tuyau, ils délimitent un espace de contrôle annulaire (18) entre la paroi intérieure du tuyau et le corps d'appareil tubulaire, où en outre une deuxième conduite d'air comprimé (19) mène dans l'espace de contrôle et une surpression peut être détectée dans l'espace de contrôle par un capteur de pression (16),
**caractérisé en ce que** le corps d'appareil (4) présente au moins dans la zone entre les coussinets d'étanchéité (7) une partie de boîtier (5) en un matériau transparent, et **en ce que** l'appareil de contrôle de pression (1) peut être couplé à un véhicule de roulement à caméra (22) de façon qu'une caméra pivotante (24) du véhicule de roulement à caméra (22) soit disposée dans l'espace intérieur de la partie de boîtier (5) et puisse pivoter de façon à être orientée vers la zone du raccord par manchon.

2. Appareil de contrôle de pression selon la revendication 1, **caractérisé en ce que** les coussinets d'étanchéité (7) reposent dans des logements annulaires (6) en forme de U en section transversale, qui sont fixés aux extrémités latérales de la partie de boîtier transparente respectivement du tuyau (5).

3. Appareil de contrôle de pression selon la revendication 1 ou 2, **caractérisé en ce que** la première conduite d'air comprimé (11) débouche à travers la paroi de fond (14) des logements (6) dans les deux coussinets d'étanchéité (7).

4. Appareil de contrôle de pression selon l'une des revendications 1 à 3, **caractérisé en ce que** sont fixées à l'extrémité avant, éloignée de l'ouverture d'entrée de la caméra (24), de l'appareil de contrôle de pression (1) des roues (21).

5. Appareil de contrôle de pression selon la revendication 4, **caractérisé en ce que** les roues (21) sont fixées à des bras de support (20) qui font saillie du logement (6) du coussinet d'étanchéité avant (7) dans la direction axiale.

6. Appareil de contrôle de pression selon l'une des revendications 1 à 5, **caractérisé en ce que** la deuxième conduite d'air comprimé (19) mêne à travers le tuyau transparent respectivement la partie de boîtier (5) ou à travers le corps de base dans l'espace de contrôle (18).

7. Appareil de contrôle de pression selon l'une des revendications 1 à 6, **caractérisé en ce qu'**une conduite (15) vers le capteur de pression (16) se sépare de la deuxième conduite d'air comprimé (19).

8. Appareil de contrôle de pression selon la revendication 7, **caractérisé en ce qu'**il est disposé en amont du branchement de la conduite (15) menant au capteur de pression (16) une vanne électromagnétique (17) dans la deuxième conduite d'air comprimé (19).

9. Appareil de contrôle de pression selon l'une des revendications 1 à 8, **caractérisé en ce que** l'appareil de contrôle de pression (1) peut être vissé au véhicule de roulement à caméra (22).

10. Appareil de contrôle de pression selon l'une des revendications 1 à 9, **caractérisé en ce que** l'appareil de contrôle de pression est couplé par une liaison à enclenchement relâchable au véhicule muni de la caméra.
